# EUROPÄISCHE PATENTSCHRIFT

(11) **EP 4 086 502 B1**
(45) Veröffentlichungstag und Bekanntmachung des Hinweises auf die Patenterteilung: **11.12.2024**
(21) Anmeldenummer: 22169660.2
(22) Anmeldetag: 25.04.2022
(51) Int. Cl.: F16N 21/02

(54) **SCHMIERNIPPEL**
LUBRICATING NIPPLE
EMBÔUT DE LUBRIFICATION

(30) Priorität: 05.05.2021 DE 202021110242 U
(43) Veröffentlichungstag der Anmeldung: 09.11.2022
(73) Patentinhaber: Maser, Frank, 33334 Gütersloh (DE)
(72) Erfinder: Maser, Frank, 33334 Gütersloh (DE)
(74) Vertreter: Ter Meer Steinmeister & Partner

(56) Entgegenhaltungen:
- WO-A1-2022/000037
- DE-A1- 102019 111 095
- JP-A- 2004 132 531
- US-A1- 2007 262 875
- US-A1- 2019 107 249

## Beschreibung

Die Erfindung betrifft einen Schmiernippel mit einem verrundeten Kopf, an den sich axial ein im Durchmesser reduzierter Schaft, eine Schlüsselhandhabe und ein Gewindeabschnitt anschließen, und mit einem axial durch den Schmiernippel hindurchgehenden Schmiermittelkanal, wobei in der Schlüsselhandhabe ein RFID-Transponder angeordnet ist.

Schmiernippel dienen zum Abschmieren von Lagern in Maschinen. Der Schmiernippel ist mit seinem Gewindeabschnitt in eine Gewindebohrung eines Maschinenteils einge-schraubt, die über einen Schmiermittelkanal mit den abzuschmierenden Lagerflächen verbunden ist. An den Kopf des Schmiernippels kann dann entweder direkt oder über eine flexible Leitung und eine Kupplung eine motor- oder handbetätigte Fettpresse angekuppelt werden, über die Schmiermittel in den Schmiermittelkanal gepresst wird.

In der Regel müssen die Maschinen, an denen sich die Schmiernippel befinden, in regelmäßigen Abständen gewartet werden. Solche Wartungsvorgänge umfassen in der Regel auch das Erneuern oder Ergänzen des Schmiermittels. Es ist üblich und in vielen Fällen Vorschrift, dass die Wartungsvorgänge einschließlich der Abschmiervorgänge sorgfältig protokolliert werden, unter Angabe der versorgten Schmierstellen, der Zeitpunkte der Abschmiervorgänge, des Schmiermittels und ggf. des Einpressdruckes.

Aus US 2019/107249 A1 ist ein Schmiernippel der eingangs genanntem Art ist aus bekannt, bei dem ein RFID-Transponder es erlaubt, die Protokollierung der Abschmiervorgänge zu vereinfachen.

Aufgabe der Erfindung ist es, den bekannten Schmiernippel zu verbessern..

Diese Aufgabe wird erfindungsgemäß dadurch gelöst, dass die Schlüsselhandhabe eine ringförmig um den Schaft umlaufende Nut aufweist, die den RFID-Transponder aufnimmt, der den Schaft ringförmig umgibt.

In dem Transponder kann mit Hilfe eines Schreibkopfes eine Kennung gespeichert werden, die die Schmierstelle identifiziert, an der sich der Schmiernippel befindet. Während des Abschmiervorgangs kommuniziert der RFID-Transponder dann drahtlos mit einem Lesekopf oder einem Schreib- und Lesekopf, der beispielsweise lösbar an der Kupplung oder der Fettpresse angeordnet sein kann und seinerseits drahtlos oder über eine Leitung mit einem Aufzeichnungsgerät kommuniziert, in dem auf diese Weise festgehalten werden kann, welche Schmierstellen zu welchen Zeiten versorgt worden sind.

Die Erfindung hat den Vorteil, dass der Transponder sehr platzsparend in unmittelbarer Nähe des betreffenden Schmiermittelkanals angeordnet werden kann und dass für die Montage des Transponders keine besonderen Arbeitsgänge erforderlich sind.

Durch die unmittelbare Integration des Transponders in den Schmiernippel und ggf. die Anordnung des zugehörigen Lesekopfes an der Schmiermittelkupplung oder Fettpresse kann sichergestellt werden, dass das Lesegerät nur Daten von dem Transponder empfängt, an den die Fettpresse wirklich angekuppelt ist. Dadurch wird insbesondere die Gefahr von Verwechslungen in den Fällen vermieden, in denen sich mehrere Schmierstellen in relativ geringem Abstand an derselben Maschine befinden. Die Fertigung der Schmiernippel mit den integrierten RFID-Transpondern kann maschinell auf sehr rationelle Weise erfolgen, ohne dass irgendwelche Handarbeit erforderlich ist.

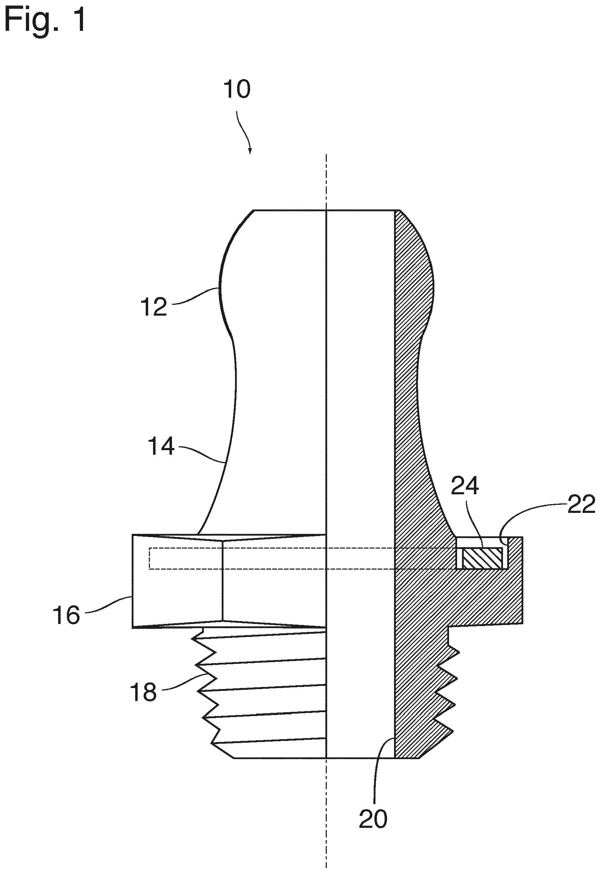

Im folgenden wird ein Ausführungsbeispiel anhand der Zeichnung näher erläutert.

Die einzige Zeichnungsfigur zeigt einen zur Hälfte aufgeschnittenen Schmiernippel mit integriertem RFID-Transponder.

Der in der Zeichnung gezeigte Schmiernippel 10 weist wie üblich einen annähernd sphärischen Kopf 12 am verjüngten Ende eines konisch ausgebildeten Schaftes 14 auf. An den Schaft 14 schließt sich axial eine scheibenförmige Schlüsselhandhabe 16 für ein Schraubwerkzeug an, an die sich ein Gewindeabschnitt 18 anschließt, der im gezeigten Beispiel als Selbstformgewinde ausgebildet ist. Ein Schmiermittelkanal 20 erstreckt sich in axialer Richtung durchgehend durch den gesamten Schmiernippel.

In der Schlüsselhandhabe 16 ist auf der dem Kopf 12 zugewandten Seite in einem Bereich, der radial außerhalb des Fußes des Schaftes 14 liegt, eine ringförmige Nut 22 gebildet, die einen ringförmigen RFID-Transponder 24 aufnimmt, der somit den Schaft 14 des Schmiernippels umgibt.

## Patentansprüche

1. Schmiernippel mit einem verrundeten Kopf (12), an den sich axial ein im Durchmesser reduzierter Schaft (14), eine Schlüsselhandhabe (16) und ein Gewindeabschnitt (18) anschließen, und mit einem axial durch den Schmiernippel hindurchgehenden Schmiermittelkanal (20), wobei in der Schlüsselhandhabe (16) ein RFID-Transponder (24) angeordnet ist, **dadurch gekennzeichnet, dass** die Schlüsselhandhabe (16) eine ringförmig um den Schaft (14) umlaufende Nut (22) aufweist, die den RFID-Transponder (24) aufnimmt, der den Schaft (14) ringförmig umgibt.

## Claims

1. Grease nipple having a rounded head (12), and, axially adjoining thereto, a reduced-diameter shaft (14), a key handle (16) and a threaded section (18), the grease nipple further comprising a lubricant channel (20) passing axially therethrough, wherein an RFID transponder (24) is arranged in the key handle (16), **characterized in that** the key handle (16) has a ring-shaped groove (22) that runs around the shaft (14) and contains the RFID transponder (24) which annularly surrounds the shaft (14).

## Revendications

1. Raccord fileté de graissage ayant une tête arrondie (12), sur lequel un corps à diamètre réduit (14), un élément de prise pour clé (16) et une partie filetée (18) se succèdent axialement, et un canal de lubrifiant (20) traversant axialement le raccord fileté de graissage, dans lequel un transpondeur RFID (24) est agencé dans l'élément de prise pour clé (16), **caractérisé en ce que** l'élément de prise pour clé (16) comporte une gorge (22) entourant le corps (14) de manière annulaire, laquelle gorge reçoit le transpondeur RFID (24) qui entoure le corps (14) de manière annulaire
